# EUROPEAN PATENT SPECIFICATION

(11) **EP 4 219 832 B1**
(45) Date of publication and mention of the grant of the patent: **30.07.2025**
(21) Application number: 22159096.1
(22) Date of filing: 28.02.2022
(51) Int. Cl.: E01C 13/08

(54) **INFILL MATERIAL FOR SYNTHETIC TURF SURFACE AND RELATED PRODUCTION PROCESS**
FÜLLMATERIAL FÜR KUNSTRASENFLÄCHEN UND ZUGEHÖRIGES PRODUKTIONSVERFAHREN
MATÉRIAU DE REMPLISSAGE POUR SURFACE DE GAZON SYNTHÉTIQUE ET PROCÉDÉ DE PRODUCTION ASSOCIÉ

(30) Priority: 28.01.2022 PT 2022117767
(43) Date of publication of application: 02.08.2023
(73) Proprietor: Sue - Sports Unified Europe, Lda, 4715-010 BRAGA (PT)
(72) Inventor: Seaton, Reed J., AUSTIN, 78735 (US); Macedo, Luis Filipe V., 4715-010 BRAGA (PT)
(74) Representative: Tirloni, Bartolomeo

(56) References cited:
- EP-A1- 3 272 939
- EP-A1- 3 936 665
- WO-A1-2018/208150
- KR-B1- 101 363 360

## Description

### Technical field of the invention

The present invention relates to an infill material for a synthetic turf surface and to a production process of an infill material.

### State of the art

In the making of surfaces for sports use (e.g., soccer fields, football fields, rugby fields, baseball fields, etc.) and/or for decorative use (e.g., gardens), a rigid and compact substrate (e.g., in clay or asphalt) is typically prepared and then a synthetic turf mat comprising artificial fibres simulating the natural grass is laid above the substrate. In addition, a layer of material called infill (which can be made of various materials such as rubber granules, even recycled rubber granules; sand; plant material, such as cork and/or coconut; etc.) is typically spread on the synthetic turf mat between the artificial fibres. The infill structurally stabilizes the synthetic turf mat and/or improves its aesthetic quality, making it look more likely to the natural grass (as it facilitates the upright position of the artificial fibres), and/or improves the performance properties of the mat (for example in terms of mechanical response of the mat, rolling/bouncing of the ball, etc.) thus facilitating its use for sports.

US2010055461A1, US2018080183A1, WO2006109110A1, US2015252537A1, EP3936665A1, WO2018208150A1, KR101363360B1 and EP3272939A1 disclose a respective infill material originating from plant materials.

WO2016205087A1 disclose a granular infill material comprising a thermoplastic polymeric matrix and a cellulose-based filler.

### Summary of the invention

The Applicant has realized that known infill materials have some drawbacks or can be improved in one or more aspects.

The Applicant has observed that the use of plant materials as such (possibly mixed with sand or rubber material), as disclosed in US2010055461A1, US2018080183A1, WO2006109110A1 and US2015252537A1, leads to an infill material with unsatisfactory performance properties during use of the synthetic turf mat, or an infill material which does not maintain the performance properties over time.

For example, the deformation of the infill material (e.g., due to the trampling action of the users) causes an increase in the wear of the synthetic turf mat (e.g., since the deformation involves a decrease in the volume of the infill and consequently a greater portion of the artificial fibres is left free and, thus, subjected to wear during use of the mat) and/or a loss of the ability to efficiently cushion/absorb the stresses to which the synthetic turf mat is subjected during use (causing for example a decrease in comfort for the users and/or an increase in the injury risk, e.g., joint injuries).

In addition, the water-retaining properties of the infill material are strongly dependent on the water-retaining properties of the specific plant material, in particular its hygroscopicity (i.e., the ability to absorb humidity in the air) and its hydrophilicity (i.e., the ability to absorb water in liquid form, e.g., rain or actively sprayed on the mat). On one hand, in case of low water-retaining properties of the plant material, there is a risk of excessive overheating of the synthetic turf mat (e.g., due to sun irradiation) and/or a waste of water (actively sprayed) for cooling the synthetic turf mat and/or an increase in injury risk due to the high friction given by the dry synthetic turf mat. On the other hand, in case of excessive water-retaining properties of the plant material, there is the risk of a weakening of the infill material with consequent loss of performance properties of the infill material.

Biodegradation is a process of breakdown of a material/substance performed by the action of microorganisms (such as bacteria and/or fungi). Typically, the biodegradation comprise three steps: i) biodeterioration which modifies the mechanical, physical and/or chemical properties of the material/substance and occurs when the material/substance is exposed to abiotic factors in the outdoor environment (e.g., stresses, light, high temperature and/or chemicals), ii) bio-fragmentation which is the breaking of the polymeric chains of the material/substance into oligomers (short polymeric chains having low molecular weight) and monomers, and iii) assimilation of the oligomers and/or monomers by the microorganisms.

By "not biodegradable" referred to a material/substance it is meant that the biodegradation of the material/substance occurs in a time interval in the order of several tens of years, e.g., at least about 50 or 100 years.

The Applicant has also observed that the use of thermoplastic polymeric material (e.g., PVC, PE, PET, PP), as disclosed in WO2016205087A1, can cause health risks for the users of the synthetic turf mat and/or pollution risks for the environment, e.g., since the above polymeric materials are (substantially) not biodegradable and also release toxic/reactive substances during biodegradation (e.g., oligomers/monomers which are unstable components, which could cause health risks).

The Applicant has therefore faced the problem of obtaining, through an ecologically-friendly production process, an infill material for a synthetic turf surface, which is endowed with the desired performance properties (e.g., in terms of mechanical and/or water-retaining properties), and at the same time is (relatively rapidly and/or highly) biodegradable, preferably with little or no release of toxic/reactive substances for both the users of the synthetic turf surface and the environment.

According to the Applicant, the above problem is solved by an infill material for a synthetic turf surface and a production process of an infill material according to the attached claims and/or having one or more of the following features.

According to an aspect the invention relates to an infill material for a synthetic turf surface according to claim 1.

According to an aspect the invention relates to a production process of an infill material for a synthetic turf surface according to claim 8.

The expression "grinding a blend" comprises any possible action (e.g., crushing, milling, pulverizing, powdering, shredding, crumbling, smashing, scraping, etc.) suitable for reducing the starting size of the blend for obtaining the small size particles.

According to the Applicant, the use of a polymeric material selected in the above list is safe and/or healthy because it minimizes, or totally avoids, the health risks for the users of the synthetic turf surface and/or the pollution risks for the environment. In fact, the Applicant has experimentally observed (through a large test campaign) that, during biodegradation, the above polymeric materials produce (only) carbon dioxide, nitrogen, water and/or inorganic salts which are not toxic both for the users of the synthetic turf surface and the environment wherein the synthetic turf surface is positioned. Moreover, the above listed polymeric materials, when blended as herein described, have a biodegradation kinetic which is suitable for use in an infill material under the atmospheric conditions typically present in an environment wherein the synthetic turf surface is positioned (e.g., temperature ranging between 0-65°C, UR ranging between 30-90%, atmospheric pressure). For example, the (complete) biodegradation of the above polymeric materials may occur in a time interval ranging between 2-10 years. These biodegradation times render the use of the above listed polymeric materials for making the polymeric matrix of the infill material industrially and environmentally sustainable.

In addition, the use of a plant material as reinforcing filler (of no harm as well for both the users and the environment) allows obtaining a completely biodegradable and/or eco-friendly infill material, in combination with the use of the above listed polymeric materials for making the polymeric matrix. According to the Applicant, the infill material according to the present invention is also recyclable in case the synthetic turf surface has to be dismantled, thus favouring a circular economy and a saving of costs. It is also noted that the production cost of the infill material of the present invention is low since, on one hand, the cost of part of the raw material, e.g., the plant material, is very low, or substantially null; and, on the other hand, the re-use of materials is strongly incentivized given the high general attention to circular economy.

The Applicant has also experimentally observed that the infill material according to the present invention has suitable performance properties, e.g., in terms of mechanical behaviour (e.g., shock absorption, bouncing of the ball, etc.) and/or water-retaining properties.

The present invention in one or more of the aforesaid aspects can have one or more of the following preferred features.

Preferably said particles are fibres (as opposed to granules which have a generally circular shape).

Preferably the fibres have a dimension ("length") much greater (e.g., at least ten times, preferably at least twenty times, greater) than at least one of (preferably both) the other two dimensions (width and thickness).

Preferably the fibres have a highly irregular shape (e.g., the surface of the fibre is jagged, possibly with thin, wry, filaments protruding from the surface).

The Applicant, without restricting to any theory, has observed that the fibrous, irregular, shape of the infill material, as compared to infill material made of generally round particles, enhances the performance properties of the infill material. For example, such fibrous, irregular, shape causes an intertwining of the fibres to form a "tangle" (where each fibre is, at least partially, mechanically bonded to the adjacent fibres), which provides a good stability of the infill material on the synthetic turf surface, since it allows limiting the migration of the single fibres in the side areas of the synthetic turf surface for example due to the running of the athletes and/or to the rebound of the ball and/or to atmospheric precipitation (e.g., flood). The Applicant has also observed that the "tangle" of fibres has a sponge-like structure provided by the void spaces between adjacent fibres of the "tangle", which, according to the Applicant, provides for a triple beneficial effect. Firstly, the sponge-like structure allows a good mechanical behaviour (e.g., cushioning/shock absorption of the stresses due to the trampling action of the users playing on the surface and/or rebound of the ball and/or displacement of the particles during the rolling/bouncing of the ball and/or the trampling action of the users, in the jargon called "splash effect") which results in an improved comfort for the users and/or in a reduction of injury risks and/or improved surface feed-back. Secondly, the sponge-like structure allows maintaining over time the dimensional properties of the infill material, even in face of the stresses underwent by the infill material during use. The Applicant has for example noted during testing that the fibrous sponge-like structure has a mechanical memory that acts quickly, reducing immediate compaction and the associated loss of performance, for example in a series of impact tests. The dimensional stability results in a lower wear of the infill material itself (for example due to rubbing between the fibres) and/or of the synthetic turf surface (e.g., a substantially fixed portion of the artificial fibres is left free and subjected to wear). Moreover, according to the Applicant, the dimensional stability is further enhanced by the use of plant material for making the reinforcing filler. In fact, the Applicant has experimentally observed that the fragments of plant material, during the heating and mixing operations, do not typically undergo a complete melting, or even remain substantially intact. According to the Applicant (without restricting to any theory), the plant material favours the maintaining over time of the dimensional properties of the fibres due to its effect of supporting structure. Thirdly, the sponge-like structure allows entrapping drops of water (e.g., rain, and/or actively sprayed on the surface) in the void spaces between the fibres, thus providing the desired water-retaining properties to the infill material. In this way, the overheating of the synthetic turf surface is limited (or completely avoided), with consequent reduction of damages of the surface and/or increase of the ergonomics of the surface for the users. The Applicant also believes that the high dimensional stability of the infill material (as explained above) allows maintaining the water-retaining properties substantially unchanged over time, since, during use of the surface, there is a low, or substantially null, permanent collapse of the infill (which at least partially tends to return to its original thickness) avoiding the occlusion (at least of part) of the void spaces between the fibres. Finally, the Applicant has also observed that the fibrous shape of the infill material allows to substantially replicate the feeling/perception that a user would have during trampling/playing on a natural grass surface, thus providing for a higher comfort for the users during use of the synthetic turf surface.

Preferably an average length (i.e., the main dimension) of the fibres (from a statistical point of view) is greater than or equal to 1 mm, more preferably greater than or equal to 1.5 mm, and/or less than or equal to 4 mm, more preferably less than or equal to 3 mm. Preferably an average thickness of the fibres (from a statistical point of view) is greater than or equal to 5 µm, more preferably greater than or equal to 10 µm, and/or less than or equal to 60 µm, more preferably less than or equal to 50 µm.

Preferably said plant material is selected in the group: olive pits, pine cones, wood sawdust, coconut fibre/peat, cork, rice husk, banana fibre/peat, lignin, tree defibration, hemp, corn pits, or combinations thereof. In this way, the cost of the infill material is limited (since they are typically scrap materials) and, furthermore, easily disposable materials are used, thus reducing the risk of pollution for the environment.

In one particularly preferred embodiment said plant material is olive pits, preferably dried in advance to said heating and mixing (for limiting vapour generation during blending). The Applicant believes that the large availability of this material helps reducing the costs of the infill material. Moreover, the hardness of the material further improves the abovesaid dimensional stability of the infill material.

Preferably said blend (or said particles) comprises a weight percentage of said plant material greater than or equal to 5%, more preferably greater than or equal to 10% mm, and/or less than or equal to 50%, more preferably less than or equal to 40%, of an overall weight of said blend (or particles).

Preferably providing said fragments of said plant material comprises grinding said plant material, preferably for obtaining (a substantial part of) said fragments with size less than 1 mm.

Preferably said polymeric material is selected in the group: polylactic acid (PLA), polybutylene adipate terephthalate (PBAT), polyglycolic acid (PGA), polycaprolactone (PCL), poly(lactic-co-glycolic) acid (PLGA), or combinations thereof. The Applicant has realized that the biodegradation kinetic of these materials is particularly suitable for use in an infill material. Moreover, these polymeric materials can be easily processed with many industrial techniques (e.g., extrusion) thus simplifying the overall production process of the infill material.

In one particularly preferred embodiment said polymeric material is polylactic acid (PLA). The Applicant has observed that particles comprising a polymeric matrix made of PLA and a reinforcing filler made of plant material are particularly suitable for use as infill material, since the biodegradation kinetic of the resulting composite material may be higher (i.e., the biodegradation is faster) than the biodegradation kinetic of PLA as such (which typically only occurs in certain conditions, e.g., temperature above 60°C). The Applicant, without restricting to any theory, believes that the residual moisture content in the reinforcing filler made of plant material favours a partial hydrolysis of the PLA chains, thus making the resulting particles suitable for use as infill material.

In one alternative embodiment said polymeric material is a poly-hydroxy-alkanoate (PHA), more preferably is poly-hydroxy-butyrate (PHB).

Preferably said blend (or said particles) comprises a weight percentage of said polymeric material greater than or equal to 40%, more preferably greater than or equal to 50%, even more preferably greater than or equal to 60% mm, and/or less than or equal to 95%, more preferably less than or equal to 90%, of an overall weight of said blend (or particles).

Preferably said particles comprise a plasticizing agent. Preferably the process comprises providing a plasticizing agent and heating and mixing said plasticizing agent with said fragments of said plant material and said polymeric material. Preferably said plasticizing agent is an epoxidized vegetable oil, more preferably selected in the group of epoxidized Vernonia oil, epoxidized linseed oil and epoxidized soybean oil (ESBO). In one particularly preferred embodiment said plasticizing agent is epoxidized soybean oil (ESBO).

Preferably said blend (or said particles) comprises a weight percentage of said plasticizing agent greater than or equal to 1.5%, more preferably greater than or equal to 2% mm, and/or less than or equal to 12%, more preferably less than or equal to 10%, of an overall weight of said blend (or said particles).

The Applicant believes that the addition of a plasticizing agent enhances the workability of the polymeric material and/or the embedding of the reinforcing filler in the polymeric matrix, since the plasticizing agent makes the polymeric material softer (e.g., decrease its viscosity) and more flexible (e.g., increase its plasticity). Moreover, the Applicant has observed that the above plasticizing agents have a biodegradation kinetic suitable for use in an infill material. Finally, the Applicant has observed that the above plasticizing agents facilitate obtaining the infill material in fibrous form by grinding the blend, with the abovesaid advantages in terms of performance properties.

Preferably said particles comprise a biocidal agent. Preferably the process comprises providing a biocidal agent and heating and mixing said biocidal agent with said fragments of said plant material and said polymeric material.

Preferably said blend (or said particles) comprises a weight percentage of said biocidal agent greater than or equal to 0.1%, more preferably greater than or equal to 0.2%, and/or less than or equal to 5%, more preferably less than or equal to 3%, of an overall weight of said blend (or said particles).

Preferably said biocidal agent is selected in the group: organic silanes, chlore-based biocidal agents, zinc-based biocidal agents (e.g., zinc pyrithione), or combinations thereof. More preferably said biocidal agent is an organic silane. The Applicant has found that these components allow for a high protection against microorganisms that could possibly proliferate on the synthetic turf surface.

Preferably said organic silanes are selected in the group: dimethyl-dichloro-silanes; trimethylsilyl-chlorides; trimethoxysilyl-chlorides; methyl-trichloro-silanes; or combinations thereof. In this way, it is used an easily available biocidal agent having good biocidal, in particular antibacterial, properties.

In one particularly preferred embodiment said biocidal agent is a trimethoxysilyl-chloride. In this way, according to the Applicant, a class of compounds able to provide high biocidal properties to the infill material is used, since the compounds of the above class maintain over time the bacterial load at very low, if not null, levels.

Preferably said chlore-based biocidal agent is a chlorophenoxy-phenol. More preferably said biocidal agent is 5-chloro2-(4-chlorophenoxy)-phenol. In this way, the biocidal agent is provided with a broad-spectrum biocidal action since chlorophenoxy-phenols are also effective against molds and fungi.

Preferably said particles comprise one or more additives. Preferably the process comprises providing one or more additives and heating and mixing said one or more additives with said fragments of said plant material and said polymeric material. Preferably said one or more additives are selected among anti-oxidants (e.g., having a thermo-stabilizing function), anti-UV rays and/or dyes. In this way it is possible simply providing particular properties to the infill material.

Preferably said blend (or said particles) comprises a weight percentage of each of said one or more additives greater than or equal to 0.1% and/or less than or equal to 5% of an overall weight of said blend (or said particles).

Preferably said heating and mixing is performed in an extruder. In this way, the heating and mixing of (at least) the fragments of plant material and the polymeric material is carried out efficiently.

Preferably said extruder is a twin-screw extruder, preferably with co-rotating screws at least partially penetrating. Preferably the extruder is structured so that the rotation velocity of the screws is greater than or equal to 100 rpm, more preferably greater than or equal to 150 rpm, even more preferably greater than or equal to 200 rpm, and/or less than or equal to 700 rpm, more preferably less than or equal to 600 rpm, even more preferably less than or equal to 500 rpm. Preferably, during said heating and mixing, a pressure in said extruder is greater than or equal to 15 bar, more preferably greater than or equal to 20 bar, and/or less than or equal to 45 bar, more preferably less than or equal to 40 bar. In this way a suitable machine which can operate in suitable working conditions for obtaining the infill material is provided.

Preferably said heating comprises bringing (at least) said fragments of said plant material and said polymeric material to a temperature greater than or equal to 160°C, more preferably greater than or equal to 170°C, and/or less than or equal to 250°C, more preferably less than or equal to 220°C. This temperature allows the homogeneous softening of the above polymeric materials.

Preferably said heating comprises bringing (at least) said fragments of said plant material and said polymeric material to a temperature greater than or equal to a melting temperature of said polymeric material and less than or equal to a scorching temperature of said plant material. In this way, it is possible avoiding a total burnout of the plant material which make up the reinforcing filler of the particles.

Preferably, before said cooling said blend, it is provided extruding said blend for obtaining a continuous stripe of blend. Preferably said cooling said blend comprises cooling (preferably by means of water baths and subsequent drying, e.g., by means of air) said continuous stripe of blend, preferably to room temperature (i.e., 20-25°C).

Preferably before grinding said cooled blend the process comprises obtaining pellets of blend (e.g., small cylinders or eggs), more preferably pelletizing said continuous stripe. Preferably said pellets of blend are in the form of sticks. Preferably said pellets have a length greater than or equal to 3 mm, more preferably greater than or equal to 4 mm, and/or less than or equal to 15 mm, more preferably less than or equal to 12 mm, and/or have a thickness (e.g., a diameter) greater than or equal to 2 mm, more preferably greater than or equal to 3 mm, and/or less than or equal to 7 mm, more preferably less than or equal to 5 mm.

Preferably grinding said cooled blend comprises grinding said pellets of blend and sieving said grinded pellets of blend for obtaining said particles. Preferably said sieving said grinded pellets of blend is performed by a sieve having hole size greater than or equal to 0.2 mm, more preferably greater than or equal to 0.4 mm, and/or less than or equal to 6 mm, more preferably less than or equal to 4 mm.

Preferably said particles of the infill material have a real density greater than or equal to 1 g/cm³, more preferably greater than or equal to 1.10 g/cm³, even more preferably greater than or equal to 1.20 g/cm³ (and preferably less than or equal to 1.30 g/cm³). The Applicant has experimentally observed that the above density of the infill material helps to maintain the position of the particles on the synthetic turf surface, thus limiting (or avoiding) the accumulation of the infill material in the side areas of the synthetic turf surface.

The process comprises heterogeneously mixing the particles according to any embodiments of the present invention with further infill particles. Said further infill particles are dried olive pits, preferably having size between 0.5mm-2.5mm. Preferably a weight content in said mixture of said particles is greater than or equal to 5% and/or less than or equal to 50%, more preferably less than or equal to 40%, even more preferably less than or equal to 30%.

According to a further aspect the invention relates to a synthetic turf surface comprising a synthetic turf mat and a layer of an infill material (produced) according to any embodiment of the present invention, the layer being arranged above said synthetic turf mat. In this way, the desired biodegradability and/or the desired performance properties (e.g., in terms of wear resistance and/or low abrasion risk for the users and/or adherence for the users) and/or the desired aesthetic properties (e.g., likelihood to the natural grass) are provided to the synthetic turf surface.

Preferably said infill material of said layer has a sponge-like structure.

Preferably said infill material has an apparent density (according to EN 1097-3) less than or equal to 0.8 g/cm³, more preferably less than or equal to 0.6 g/cm³, even more preferably less than or equal to 0.4 g/cm³ (and preferably greater than or equal to 0,05 g/cm³). The Applicant has experimentally observed that the above apparent density of the infill material, obtained by a sufficient proportion of voids between the fibers, provides excellent performances described above.

Preferably said layer of infill material has a mass per unit area greater than or equal to 2 kg/m², more preferably greater than or equal to 5 kg/m², and/or less than or equal to 15 kg/m², more preferably lower or equal to 12 kg/m². In this way, the appropriate amount of infill material is provided for giving the desired properties to the synthetic turf surface.

### Brief description of the drawings

Figure 1 schematically shows in vertical section a synthetic turf surface comprising a layer of infill material according to the present invention;
Figure 2 shows a block diagram of a production process of an infill material according to the present invention;
Figure 3 shows a picture of an infill material according to the present invention.

### Detailed description of some embodiments of the invention

The features and the advantages of the present invention will be further clarified by the following detailed description of some embodiments, presented by way of non-limiting example of the present invention, with reference to the attached figures.

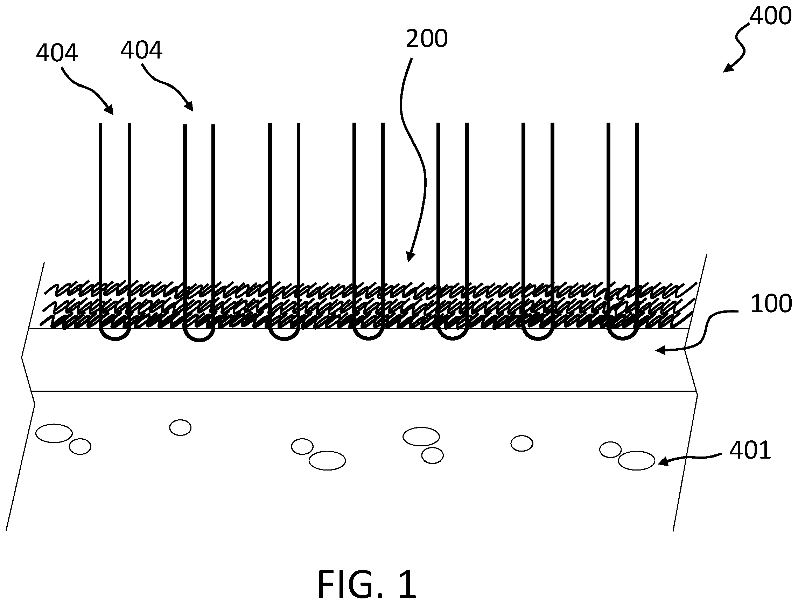

With reference to figure 1, it is schematically shown a synthetic turf surface 400 comprising a compact clay substrate 401 (for example as known) and a synthetic turf mat 100 (e.g., of known type and not further described) laid on the substrate 401. Typically, the synthetic turf mat 100 comprises a plurality of artificial fibres 404 (which simulate the grass threads) for example woven by tufting in the synthetic turf mat 100. The synthetic turf surface 400 further comprises one layer of infill material 200 arranged on the synthetic turf mat 100 between the artificial fibres 404. Exemplarily the layer of infill material 200 has a thickness equal to about 10 mm and a mass per unit area exemplarily equal to about 6.3 kg/m².

Typically, the infill material of the present invention constitutes a performance infill of the synthetic turf surface 400 and therefore it is arranged at the top of the infill. Typically, under the layer of infill material 200, a layer of stabilizing material (not shown), exemplarily made of sand or pea gravel, is provided.

The infill material 200 comprises a plurality of particles 201 according to the present invention.

The infill material 200 is a mixture of the particles 201 with further infill particles**.** Said further infill particles are dried olive pits, the mixture comprising exemplarily 10% by weight of said particles 201 and 90% by weight of said olive pit particles.

According to the invention, each of the particles 201 comprises a polymeric matrix exemplarily made of polylactic acid (PLA) and a reinforcing filler dispersed in the polymeric matrix, wherein the reinforcing filler is exemplarily made of olive pits. Exemplarily the infill material 200 has real density equal to about 1.26 g/cm³, measured according to standard ISO 1183-1/A, and an apparent density equal to about 0.1-0.2 g/cm³ measured according to standard EN 1097-3.

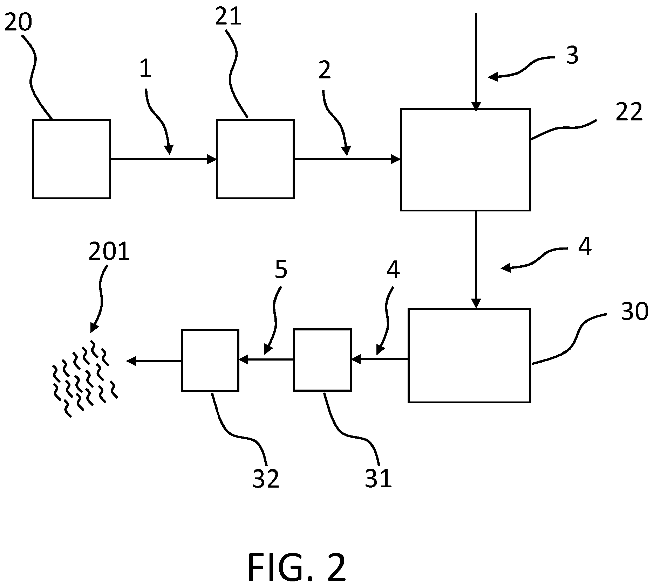

With reference to figure 2, reference number 20 schematically indicates a container for collecting the olive pits 1, e.g., full olive pits coming from the food and/or agricultural industry. After collection, the process exemplarily comprises grinding the olive pits 1 to obtain fragments 2 of olive pits. The grinding is exemplarily carried out by feeding the olive pits 1 to one or more grinding mills 21 (only schematically shown) in which for example there is a respective blades/counter-blades system (for example of known type). For example, the grinding can comprise a coarse pre-grinding of the olive pits 1 and a subsequent fine grinding. In this way about 85-90% in weight of the fragments has spatial dimension less than or equal to 1 mm (this favours the incorporation of the fragments in the polymeric matrix as explained below).

The process comprises feeding the fragments 2 and an amount 3 of polylactic acid (PLA) to an extruder 22. Exemplarily before the feeding (possibly before the above grinding), the fragments 2 are dried, e.g., in a convection oven (not shown) thermostated at an exemplary temperature of 50°C for a time interval of about 12 hours, and also the PLA is dried, e.g., in a dehumidifier at an exemplary temperature of 100°C for a time interval of about 12 hours (in this way it is possible to keep low the moisture evaporation within the inner chamber of the extruder).

Exemplarily, the extruder 22 is a twin-screw extruder with co-rotating screws at least partially penetrating. Exemplarily the working condition of the twin-screw extruder are: rotation velocity of the screws equal to about 300 rpm and pressure equal to about 30 bar.

Exemplarily, together with the fragments 2 and the polylactic acid, a plasticizing agent is fed to the extruder 22. Exemplarily the plasticizing agent is epoxidized soybean oil (ESBO), having CAS number: 8013-07-8.

Exemplarily, together with the fragments 2 and the polylactic acid, an anti-oxidant additive (e.g., having thermo-stabilizing function), an anti-UV-rays additive, and a dye are fed to the extruder 22.

Exemplarily, together with the fragments 2 and the polylactic acid, a biocidal agent is fed to the extruder 22. Exemplarily the biocidal agent is a trimethoxysilyl-chloride, for example having CAS number: 19911-50-70, or it is 5-chloro2-(4-chlorophenoxy)-phenol, having CAS number: 3380-30-1.

Possibly, together with the fragments 2 and the polylactic acid, also a further reinforcing material can be fed to the extruder 22. For example, the further reinforcing material is a mineral material selected in the group: calcium carbonate, talc, sand, lime, or combinations thereof. This allow reducing the overall production costs of the infill material, given the great availability of the above mineral materials.

For example, the extruder 22 comprises a plurality of feeding mouths distributed along the main development direction of the extruder 22. In this way it is possible feeding the above components either to the same feeding mouth or to feeding mouths spatially separated from each other. In this way, the components can be mixed and/or heated at a different extent (e.g., different time intervals) depending on the position of the feeding mouth used for their introduction in the extruder 22.

Alternatively, or in combination, the process can provide preparing a mixture of one or more of the above components inside a further mixing device (for example of known type), the latter acting as a tank for feeding the mixture to the extruder. For example, the further mixing device comprises a stirring and feeding device which carries out a forced mixing of the components for obtaining the mixture and the feeding of a predetermined amount of mixture to the extruder.

Following the feeding of the components to the extruder 22, the process comprises heating, exemplarily to a temperature equal to about 190°C, and mixing the components inside the extruder 22 for obtaining a (heterogeneous) blend comprising the PLA in a softened state and all the other components (including the fragments 2 of olive pits) dispersed and/or distributed in the PLA.

Exemplarily the extruder 22 comprises a series of heating elements (of known type, not shown) for allowing the heating. The mixing of the blend, as well as its displacement along the extruder, is carried out by the rotation of the screws of the extruder 22 (which are at least partially helicoidal screws).

Exemplarily the components fed into the extruder 22 enters, by rotation of the screws, in a compression area wherein the blend is formed, with the PLA that softens when subjected to strong pressures and heat application.

Exemplarily the final blend comprises the following composition: 57% of PLA, 30% of fragments of olive pit, 7% of ESBO, 1% of anti UV-rays additive, 1% of anti-oxidant additive, 3% of dye and 1% of biocidal agent.

Finally, the blend is moved towards the extrusion/outlet head of the extruder 22 for being extruded.

Exemplarily the blend is extruded in the form of a continuous stripe 4. This continuous stripe 4 is transported, exemplarily by a pulley system and/or a roller system (not shown), to a cooling station 30 for being cooled. Exemplarily the cooling station 30 comprises one or more containers (e.g., in series) with water at room temperature, with the continuous stripe 4 that is immersed in the water. After the cooling operation, the continuous stripe 4 is transported to a drying station (not shown), exemplarily comprising an air blower, for being dried.

Once the continuous stripe 4 has been dried, the continuous stripe 4 is pelletized (for example by a suitable pelletizer 31 of known type) to obtain pellets 5 of blend. Exemplarily the pellets 5 of blend are in the form of sticks having a length exemplarily equal to about 8 mm and a diameter exemplarily equal to about 5 mm.

The pellets 5 of blend are then exemplarily continuously fed to a grinding mill 32 which carries out a grinding of the pellets 5 of blend for obtaining the particles 201.

Exemplarily, the grinding mill 32 comprises a sieving device (not shown) which cooperates with the grinder and avoids that the particles 201 are ejected before the desired size is obtained.

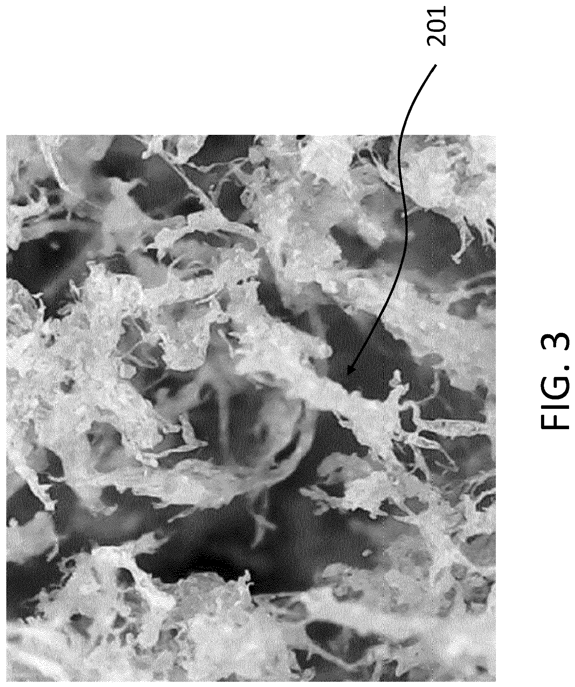

Exemplarily the particles 201 are in the form of fibres, as shown in figure 3 which represents a photograph of the fibres 201 taken at the microscope. Exemplarily the fibres have a main dimension, which is exemplarily called "length", greater than both its width and thickness. Exemplarily an average length of the fibres 201 is equal to about 3 mm and an average thickness of the fibres 201 is exemplarily equal to about 50 µm. These average dimensions of the fibres have been exemplarily taken by microscope measurement with a statistical approach. For example, it is possible to take a sample of fibers (in predetermined number) and to evaluate the number of fibres needed for occupying the so called "field of view" of the microscope which has a standard dimension. The average dimension of the fibers is exemplarily obtained by the ratio between the length of the "field of view" of the microscope and the number of fibres needed for entirely occupying the "field of view".

Exemplarily the fibres 201 have a highly irregular shape, for example having a jagged profile along the main dimension (the length) with thin, wry, filaments protruding from the surface of the fibres (as shown in figure 3). This helps the entanglement of the fibres and the formation of a sponge-like structure, as explained above.

## Claims

1. Infill material (200) for a synthetic turf surface (400), said infill material (200) comprising a plurality of particles (201) each one comprising:
- a polymeric matrix made of a polymeric material selected in the group: polylactic acid (PLA), polybutylene adipate terephthalate (PBAT), polyglycolic acid (PGA), polycaprolactone (PCL), poly(lactic-co-glycolic) acid (PLGA), poly-(2-hydroxyethylmethacrylate), poly-ethylene-glycol (PEG), chitosan, hyaluronic acid, a poly-hydroxy-alkanoate (PHA), or combinations thereof;
- a reinforcing filler dispersed in said polymeric matrix, the reinforcing filler being made of a plant material,
wherein
the infill material is a mixture comprising said particles (201) and further infill particles,
**characterized in that**
said further infill particles are olive pits.

2. Infill material (200) according to claim 1, wherein the plurality of particles (201) have a real density greater than or equal to 1 g/cm³, wherein said particles (201) are fibres having highly irregular shape and a dimension at least ten times greater than at least one of the other two dimensions, wherein an average length of the fibres is greater than or equal to 1 mm and less than or equal to 4 mm, and wherein an average thickness of the fibres is greater than or equal to 5 µm and less than or equal to 60 µm.

3. Infill material (200) according to anyone of the preceding claims, wherein said plant material is selected in the group: olive pits, pine cones, wood sawdust, coconut fibre/peat, cork, rice husk, banana fibre/peat, lignin, tree defibration, hemp, corn pits, or combinations thereof, and wherein said particles comprise a weight percentage of said plant material greater than or equal to 5% and less than or equal to 50% of an overall weight of said particles.

4. Infill material (200) according to anyone of the preceding claims, wherein said polymeric material is selected in the group: polylactic acid (PLA), polybutylene adipate terephthalate (PBAT), polyglycolic acid (PGA), polycaprolactone (PCL), poly(lactic-co-glycolic) acid (PLGA), or combinations thereof, and wherein said particles comprise a weight percentage of said polymeric material greater than or equal to 50% and less than or equal to 95%of an overall weight of said particles.

5. Infill material (200) according to anyone of the preceding claims, wherein said plurality of particles (201) comprise a plasticizing agent, wherein said plasticizing agent is an epoxidized vegetable oil selected in the group of epoxidized Vernonia oil, epoxidized linseed oil and epoxidized soybean oil (ESBO), wherein said particles (201) comprise one or more additives selected among anti-oxidants, anti-UV rays and/or dyes, and wherein said particles (201) comprise a biocidal agent selected in the group: organic silanes, chlore-based biocidal agents, zinc-based biocidal agents, or combinations thereof.

6. Infill material (200) according to anyone of the preceding claims, wherein said plant material is olive pits, wherein said polymeric material is polylactic acid (PLA), wherein said particles (201) comprises a plasticizing agent which is epoxidized soybean oil (ESBO), and wherein said particles (201) comprises a biocidal agent which is a trimethoxysilyl-chloride or 5-chloro2-(4-chlorophenoxy)-phenol.

7. Infill material (200) according to anyone of the preceding claims, wherein said further infill particles are dried olive pits having size between 0.5mm-2.5mm, and wherein a weight content of said plurality of particles (201) in said mixture is greater than or equal to 5% and less than or equal to 50%.

8. Production process of an infill material (200) for a synthetic turf surface (400), wherein the infill material (200) comprises a plurality of particles (201), the process comprising:
- providing fragments (2) of a plant material;
- providing a polymeric material selected in the group: polylactic acid (PLA), polybutylene adipate terephthalate (PBAT), polyglycolic acid (PGA), polycaprolactone (PCL), poly(lactic-co-glycolic) acid (PLGA), poly-(2-hydroxyethyl-methacrylate), poly-ethylene-glycol (PEG), chitosan, hyaluronic acid, a poly-hydroxy-alkanoate (PHA), or combinations thereof;
- heating and mixing said fragments (2) of said plant material and said polymeric material for obtaining a blend comprising said polymeric material in softened state with said fragments (2) of said plant material dispersed in said polymeric material;
- cooling said blend into solid state and grinding said cooled blend for obtaining said plurality of particles (201), wherein each of said particles (201) comprises a polymeric matrix made of said polymeric material, and a reinforcing filler dispersed in said polymeric matrix, wherein said reinforcing filler is made of said plant material
wherein
the process comprises mixing said particles (201) with further infill particles,
**characterized in that**
said further infill particles are olive pits.

9. Production process according to claim 8, wherein providing said fragments (2) of said plant material comprises grinding said plant material for obtaining said fragments (2) with size less than 1 mm, wherein said blend comprises a weight percentage of said plant material greater than or equal to 5% and less than or equal to 50% of an overall weight of said blend, and wherein said blend comprises a weight percentage of said polymeric material greater than or equal to 40% and less than or equal to 95% of an overall weight of said blend.

10. Production process according to claim 8 or 9, comprising:
- providing a plasticizing agent, providing one or more additives, providing a biocidal agent;
- heating and mixing said plasticizing agent, said one or more additives, and said biocidal agent with said fragments (2) of said plant material and said polymeric material, wherein said blend comprises:
- a weight percentage of said plasticizing agent greater than or equal to 1.5% and less than or equal to 12% of an overall weight of said blend;
- a weight percentage of each of said one or more additives greater than or equal to 0.1% and less than or equal to 5% of an overall weight of said blend;
- a weight percentage of said biocidal agent greater than or equal to 0.1% and less than or equal to 5% of an overall weight of said blend.

11. Production process according to anyone of claims from 8 to 10, wherein said heating and mixing is performed in an extruder (22) which is a twin-screw extruder, wherein said extruder (22) is structured so that the rotation velocity of the screws is greater than or equal to 100 rpm and less than or equal to 700 rpm, and wherein, during said heating and mixing, a pressure in said extruder (22) is greater than or equal to 15 bar and less than or equal to 45 bar.

12. Production process according to anyone of claims from 8 to 11, wherein said heating comprises:
- bringing said fragments (2) of said plant material and said polymeric material to a temperature greater than or equal to 160°C and less than or equal to 250°C; and
- bringing said fragments (2) of said plant material and said polymeric material to a temperature greater than or equal to a melting temperature of said polymeric material and less than or equal to a scorching temperature of said plant material.

13. Production process according to anyone of claims from 8 to 12, comprising:
- before said cooling said blend, extruding said blend for obtaining a continuous stripe (4) of blend, wherein said cooling said blend comprises cooling said continuous stripe (4) of blend to room temperature;
- before grinding said cooled blend, obtaining pellets (5) of blend by pelletizing said continuous stripe (4),
wherein grinding said cooled blend comprises grinding said pellets (5) of blend and sieving said grinded pellets (5) of blend for obtaining said particles (201).

14. Synthetic turf surface (400) comprising a synthetic turf mat (100) and a layer of an infill material (200) according to anyone of claims 1-7 or produced according to any one of claims 8-13, said layer being arranged above said synthetic turf mat (100), wherein said layer of infill material (200) has a mass per unit area greater than or equal to 2 kg/m² and less than or equal to 15 kg/m² and an apparent density less than or equal to 0.8 g/cm³.

15. Synthetic turf surface (400) according to claim 14, wherein a layer of stabilizing material, made of sand or pea gravel, is provided under the layer of infill material (200).

## Patentansprüche

1. Verfüllmaterial (200) für eine Kunstrasenoberfläche (400), wobei das Verfüllmaterial (200) eine Mehrzahl von Partikeln (201) umfasst, wobei jedes Partikel (201) Folgendes umfasst:
- eine polymere Matrix, hergestellt aus einem polymeren Material, ausgewählt aus der Gruppe: Polymilchsäure (PLA), Polybutylenadipat-Terephthalat (PBAT), Polyglycolsäure (PGA), Polycaprolacton (PCL), Poly(lactid-co-glycolid)-Säure (PLGA), Poly-(2-hydroxyethyl-methacrylat), Polyethylenglykol (PEG), Chitosan, Hyaluronsäure, ein Polyhydroxyalkanoat (PHA) oder Kombinationen davon;
- einen verstärkenden Füllstoff, dispergiert in der polymeren Matrix, wobei der verstärkende Füllstoff aus einem pflanzlichen Material besteht,
wobei das Verfüllmaterial ein Gemisch ist, das die Partikel (201) und weitere Verfüllpartikel umfasst,
**dadurch gekennzeichnet, dass** die weiteren Verfüllpartikel Olivenkerne sind.

2. Verfüllmaterial (200) nach Anspruch 1, wobei die Mehrzahl der Partikel (201) eine wahre Dichte größer oder gleich 1 g/cm³ aufweist, wobei die Partikel (201) Fasern sind, die eine stark unregelmäßige Form und eine Abmessung aufweisen, die mindestens zehnmal größer ist als mindestens eine der anderen zwei Abmessungen, wobei eine mittlere Länge der Fasern größer oder gleich 1 mm und kleiner oder gleich 4 mm ist, und wobei eine mittlere Dicke der Fasern größer oder gleich 5 µm und kleiner oder gleich 60 µm ist.

3. Verfüllmaterial (200) nach einem der vorhergehenden Ansprüche, wobei das pflanzliche Material ausgewählt ist aus der Gruppe: Olivenkerne, Tannenzapfen, Holzsägemehl, Kokosfaser/-torf, Kork, Reisschalen, Bananenfaser/-torf, Lignin, Holzaufschluss, Hanf, Maiskerne oder Kombinationen davon, und wobei die Partikel einen Gewichtsprozentsatz des pflanzlichen Materials aufweisen, der größer oder gleich 5% und kleiner oder gleich 50% eines Gesamtgewichts der Partikel ist.

4. Verfüllmaterial (200) nach einem der vorhergehenden Ansprüche, wobei das polymere Material ausgewählt ist aus der Gruppe: Polymilchsäure (PLA), Polybutylenadipat-Terephthalat (PBAT), Polyglycolsäure (PGA), Polycaprolacton (PCL), Poly(lactid-co-glycolid)-Säure (PLGA) oder Kombinationen davon, und wobei die Partikel einen Gewichtsprozentsatz des polymeren Materials aufweisen, der größer oder gleich 50% und kleiner oder gleich 95% eines Gesamtgewichts der Partikel ist.

5. Verfüllmaterial (200) nach einem der vorhergehenden Ansprüche, wobei die Mehrzahl der Partikel (201) ein Weichmachungsmittel umfasst, wobei das Weichmachungsmittel ein epoxidiertes pflanzliches Öl ist, ausgewählt aus der Gruppe: epoxidiertes Vernoniaöl, epoxidiertes Leinöl und epoxidiertes Sojaöl (ESBO), wobei die Partikel (201) ein oder mehrere Additive ausgewählt unter Antioxidationsmitteln, UV-Strahlen-Schutzmitteln und/oder Farbstoffen umfassen, und wobei die Partikel (201) ein Biozidmittel umfassen, ausgewählt aus der Gruppe: organische Silane, chlorbasierte Biozidmittel, zinkbasierte Biozidmittel oder Kombinationen davon.

6. Verfüllmaterial (200) nach einem der vorhergehenden Ansprüche, wobei das pflanzliche Material Olivenkerne ist, wobei das polymere Material Polymilchsäure (PLA) ist, wobei die Partikel (201) ein Weichmachungsmittel umfassen, das epoxidiertes Sojaöl (ESBO) ist, und wobei die Partikel (201) ein Biozidmittel umfassen, das Trimethoxysilylchlorid oder 5-Chlor-2-(4-chlorphenoxy)-phenol ist.

7. Verfüllmaterial (200) nach einem der vorhergehenden Ansprüche, wobei die weiteren Verfüllpartikel getrocknete Olivenkerne mit einer Größe zwischen 0,5 mm-2,5 mm sind, und wobei ein Gewichtsanteil der Mehrzahl der Partikel (201) in dem Gemisch größer oder gleich 5% und kleiner oder gleich 50% ist.

8. Herstellungsverfahren eines Verfüllmaterials (200) für eine Kunstrasenoberfläche (400), wobei das Verfüllmaterial (200) eine Mehrzahl von Partikeln (201) umfasst, wobei das Verfahren Folgendes umfasst:
- Bereitstellen von Fragmenten (2) eines pflanzlichen Materials;
- Bereitstellen eines polymeren Materials, ausgewählt aus der Gruppe: Polymilchsäure (PLA), Polybutylenadipat-Terephthalat (PBAT), Polyglycolsäure (PGA), Polycaprolacton (PCL), Poly(lactid-co-glycolid)-Säure (PLGA), Poly-(2-hydroxyethyl-methacrylat), Polyethylenglykol (PEG), Chitosan, Hyaluronsäure, ein Polyhydroxyalkanoat (PHA) oder Kombinationen davon;
- Erhitzen und Mischen der Fragmente (2) des pflanzlichen Materials mit dem polymeren Material zur Herstellung eines Gemisches, das das polymere Material im erweichten Zustand mit den Fragmenten (2) des pflanzlichen Materials dispergiert in dem polymeren Material umfasst;
- Abkühlen des Gemisches in den festen Zustand und Mahlen des abgekühlten Gemisches zur Herstellung der Mehrzahl von Partikeln (201), wobei jeder der Partikel (201) eine polymere Matrix aus dem polymeren Material und einen in der polymeren Matrix dispergierten verstärkenden Füllstoff umfasst, wobei der verstärkende Füllstoff aus dem pflanzlichen Material besteht,
wobei das Verfahren das Mischen der Partikel (201) mit weiteren Verfüllpartikeln umfasst, **dadurch gekennzeichnet, dass** die weiteren Verfüllpartikel Olivenkerne sind.

9. Herstellungsverfahren nach Anspruch 8, wobei das Bereitstellen der Fragmente (2) des pflanzlichen Materials das Mahlen des pflanzlichen Materials zur Herstellung der Fragmente (2) mit einer Größe von weniger als 1 mm umfasst, wobei das Gemisch einen Gewichtsprozentsatz des pflanzlichen Materials umfasst, der größer oder gleich 5% und kleiner oder gleich 50% eines Gesamtgewichts des Gemisches ist, und wobei das Gemisch einen Gewichtsprozentsatz des polymeren Materials umfasst, der größer oder gleich 40% und kleiner oder gleich 95% eines Gesamtgewichts des Gemisches ist.

10. Herstellungsverfahren nach Anspruch 8 oder 9, umfassend:
- Bereitstellen eines Weichmachungsmittels, Bereitstellen eines oder mehrerer Additive, Bereitstellen eines Biozidmittels;
- Erhitzen und Mischen des Weichmachungsmittels, des einen oder der mehreren Additive und des Biozidmittels mit den Fragmenten (2) des pflanzlichen Materials und dem polymeren Material,
wobei das Gemisch Folgendes umfasst:
- einen Gewichtsprozentsatz des Weichmachungsmittels, der größer oder gleich 1,5% und kleiner oder gleich 12% eines Gesamtgewichts des Gemisches ist;
- einen Gewichtsprozentsatz jedes der einen oder mehreren Additive, der größer oder gleich 0,1% und kleiner oder gleich 5% eines Gesamtgewichts des Gemisches ist;
- einen Gewichtsprozentsatz des Biozidmittels, der größer oder gleich 0,1% und kleiner oder gleich 5% eines Gesamtgewichts des Gemisches ist.

11. Herstellungsverfahren nach einem der Ansprüche 8 bis 10, wobei das Erhitzen und Mischen in einem Extruder (22) durchgeführt wird, der ein Doppelschneckenextruder ist, wobei der Extruder (22) so aufgebaut ist, dass die Rotationsgeschwindigkeit der Schnecken größer oder gleich 100 U/min und kleiner oder gleich 700 U/min ist, und wobei während des Erhitzens und Mischens ein Druck in dem Extruder (22) größer oder gleich 15 bar und kleiner oder gleich 45 bar ist.

12. Herstellungsverfahren nach einem der Ansprüche 8 bis 11, wobei das Erhitzen Folgendes umfasst:
- Erhitzen der Fragmente (2) des pflanzlichen Materials und des polymeren Materials auf eine Temperatur größer oder gleich 160°C und kleiner oder gleich 250°C; und
- Erhitzen der Fragmente (2) des pflanzlichen Materials und des polymeren Materials auf eine Temperatur größer oder gleich einer Schmelztemperatur des polymeren Materials und kleiner oder gleich einer Verkohlungstemperatur des pflanzlichen Materials.

13. Herstellungsverfahren nach einem der Ansprüche 8 bis 12, umfassend:
- vor dem Abkühlen des Gemisches das Extrudieren des Gemisches zur Herstellung eines kontinuierlichen Streifens (4) des Gemisches, wobei das Abkühlen des Gemisches das Abkühlen des kontinuierlichen Streifens (4) des Gemisches auf Raumtemperatur umfasst,
- vor dem Mahlen des abgekühlten Gemisches das Herstellen von Pellets (5) des Gemisches durch Pelletieren des kontinuierlichen Streifens (4),
wobei das Mahlen des abgekühlten Gemisches das Mahlen der Pellets (5) des Gemisches und das Sieben der gemahlenen Pellets (5) des Gemisches zur Herstellung der Partikel (201) umfasst.

14. Kunstrasenoberfläche (400), umfassend eine Kunstrasenmatte (100) und eine Schicht eines Verfüllmaterials (200) nach einem der Ansprüche 1-7 oder hergestellt nach einem der Ansprüche 8-13, wobei die Schicht oberhalb der Kunstrasenmatte (100) angeordnet ist, wobei die Schicht des Verfüllmaterials (200) eine Flächenmasse größer oder gleich 2 kg/m² und kleiner oder gleich 15 kg/m² und eine scheinbare Dichte kleiner oder gleich 0.8 g/cm³ aufweist.

15. Kunstrasenoberfläche (400) nach Anspruch 14, wobei eine Schicht eines stabilisierenden Materials, hergestellt aus Sand oder Kieselsteinen, unter der Schicht des Verfüllmaterials (200) vorgesehen ist.

## Revendications

1. Matériau de remplissage (200) pour une surface de gazon synthétique (400), ledit matériau de remplissage (200) comprenant une pluralité de particules (201), chacune comprenant :
- une matrice polymère constituée d'un matériau polymère sélectionné dans le groupe : acide polylactique (PLA), adipate téréphtalate de polybutylène (PBAT), acide polyglycolique (PGA), polycaprolactone (PCL), acide poly(lactique-co-glycolique) (PLGA), poly-(2-hydroxyéthyl-méthacrylate), polyéthylène-glycol (PEG), chitosane, acide hyaluronique, un poly-hydroxy-alcanoate (PHA), ou des combinaisons de ceux-ci ;
- une charge de renforcement dispersée dans ladite matrice polymère, la charge de renforcement étant constituée d'un matériau végétal,
dans lequel le matériau de remplissage est un mélange comprenant lesdites particules (201) et d'autres particules de remplissage,
**caractérisé en ce que** lesdites autres particules de remplissage sont des noyaux d'olive.

2. Matériau de remplissage (200) selon la revendication 1, dans lequel la pluralité de particules (201) présente une densité réelle supérieure ou égale à 1g/cm³, dans lequel lesdites particules (201) sont des fibres ayant une forme fortement irrégulière et une dimension au moins dix fois supérieure à au moins une des deux autres dimensions, dans lequel une longueur moyenne des fibres est supérieure ou égale à 1mm et inférieure ou égale à 4mm, et dans lequel une épaisseur moyenne des fibres est supérieure ou égale à 5µm et inférieure ou égale à 60µm.

3. Matériau de remplissage (200) selon l'une quelconque des revendications précédentes, dans lequel ledit matériau végétal est sélectionné dans le groupe: noyaux d'olive, pommes de pin, sciure de bois, fibre/ tourbe de coco, liège, balle de riz, fibre/ tourbe de bananier, lignine, défibrage d'arbre, chanvre, grains de maïs, ou des combinaisons de ceux-ci, et dans lequel lesdites particules comprennent un pourcentage massique dudit matériau végétal supérieur ou égal à 5% et inférieur ou égal à 50% d'un poids total desdites particules.

4. Matériau de remplissage (200) selon l'une quelconque des revendications précédentes, dans lequel ledit matériau polymère est sélectionné dans le groupe: acide polylactique (PLA), adipate téréphtalate de polybutylène (PBAT), acide polyglycolique (PGA), polycaprolactone (PCL), acide poly(lactique-co-glycolique) (PLGA), ou des combinaisons de ceux-ci, et dans lequel lesdites particules comprennent un pourcentage massique dudit matériau polymère supérieur ou égal à 50% et inférieur ou égal à 95% d'un poids total desdites particules.

5. Matériau de remplissage (200) selon l'une quelconque des revendications précédentes, dans lequel ladite pluralité de particules (201) comprend un agent plastifiant, dans lequel ledit agent plastifiant est une huile végétale époxydée sélectionnée dans le groupe constitué d'huile de Vernonia époxydée, d'huile de lin époxydée et d'huile de soja époxydée (ESBO), dans lequel lesdites particules (201) comprennent un ou plusieurs additifs sélectionnés parmi des antioxydants, des agents anti-UV et/ou des colorants, et dans lequel lesdites particules (201) comprennent un agent biocide sélectionné dans le groupe : silanes organiques, agents biocides à base de chlore, agents biocides à base de zinc, ou des combinaisons de ceux-ci.

6. Matériau de remplissage (200) selon l'une quelconque des revendications précédentes, dans lequel ledit matériau végétal est des noyaux d'olive, dans lequel ledit matériau polymère est l'acide polylactique (PLA), dans lequel lesdites particules (201) comprennent un agent plastifiant qui est l'huile de soja époxydée (ESBO), et dans lequel lesdites particules (201) comprennent un agent biocide qui est le triméthoxysilyl-chlorure ou le 5-chloro-2-(4-chlorophénoxy)-phénol.

7. Matériau de remplissage (200) selon l'une quelconque des revendications précédentes, dans lequel lesdites autres particules de remplissage sont des noyaux d'olive séchés ayant une taille comprise entre 0,5mm-2,5mm, et dans lequel une teneur en poids de ladite pluralité de particules (201) dans ledit mélange est supérieure ou égale à 5% et inférieure ou égale à 50%.

8. Procédé de production d'un matériau de remplissage (200) pour une surface de gazon synthétique (400), dans lequel le matériau de remplissage (200) comprend une pluralité de particules (201), le procédé comprenant :
- la fourniture de fragments (2) d'un matériau végétal ;
- la fourniture d'un matériau polymère sélectionné dans le groupe : acide polylactique (PLA), adipate téréphtalate de polybutylène (PBAT), acide polyglycolique (PGA), polycaprolactone (PCL), acide poly(lactique-co-glycolique) (PLGA), poly-(2-hydroxyéthyl-méthacrylate), polyéthylène-glycol (PEG), chitosane, acide hyaluronique, un poly-hydroxy-alcanoate (PHA), ou des combinaisons de ceux-ci ;
- le chauffage et le mélange desdits fragments (2) dudit matériau végétal et dudit matériau polymère pour obtenir un mélange comprenant ledit matériau polymère à l'état ramolli avec lesdits fragments (2) dudit matériau végétal dispersés dans ledit matériau polymère;
- le refroidissement dudit mélange à l'état solide et le broyage dudit mélange refroidi pour obtenir ladite pluralité de particules (201), dans lequel chacune desdites particules (201) comprend une matrice polymère constituée dudit matériau polymère, et une charge de renforcement dispersée dans ladite matrice polymère, dans lequel ladite charge de renforcement est constituée dudit matériau végétal,
dans lequel le procédé comprend le mélange desdites particules (201) avec d'autres particules de remplissage,
**caractérisé en ce que** lesdites autres particules de remplissage sont des noyaux d'olive.

9. Procédé de production selon la revendication 8, dans lequel la fourniture desdits fragments (2) dudit matériau végétal comprend le broyage dudit matériau végétal pour obtenir lesdits fragments (2) ayant une taille inférieure à 1 mm, dans lequel ledit mélange comprend un pourcentage massique dudit matériau végétal supérieur ou égal à 5% et inférieur ou égal à 50% d'un poids total dudit mélange, et dans lequel ledit mélange comprend un pourcentage massique dudit matériau polymère supérieur ou égal à 40% et inférieur ou égal à 95% d'un poids total dudit mélange.

10. Procédé de production selon la revendication 8 ou 9, comprenant :
- la fourniture d'un agent plastifiant, la fourniture d'un ou plusieurs additifs, la fourniture d'un agent biocide ;
- le chauffage et le mélange dudit agent plastifiant, dudit ou desdits additifs, et dudit agent biocide avec lesdits fragments (2) dudit matériau végétal et ledit matériau polymère, dans lequel ledit mélange comprend :
- un pourcentage massique dudit agent plastifiant supérieur ou égal à 1,5% et inférieur ou égal à 12% d'un poids total dudit mélange ;
- un pourcentage massique de chacun desdits un ou plusieurs additifs supérieur ou égal à 0,1% et inférieur ou égal à 5% d'un poids total dudit mélange ;
- un pourcentage massique dudit agent biocide supérieur ou égal à 0,1% et inférieur ou égal à 5% d'un poids total dudit mélange.

11. Procédé de production selon l'une quelconque des revendications 8 à 10, dans lequel ledit chauffage et ledit mélange sont effectués dans une extrudeuse (22) qui est une extrudeuse bivis, dans lequel ladite extrudeuse (22) est structurée de sorte que la vitesse de rotation des vis est supérieure ou égale à 100 tr/min et inférieure ou égale à 700 tr/min, et dans lequel, pendant ledit chauffage et ledit mélange, une pression dans ladite extrudeuse (22) est supérieure ou égale à 15 bar et inférieure ou égale à 45 bar.

12. Procédé de production selon l'une quelconque des revendications 8 à 11, dans lequel ledit chauffage comprend :
- l'élévation desdits fragments (2) dudit matériau végétal et dudit matériau polymère à une température supérieure ou égale à 160°C et inférieure ou égale à 250°C ; et
- l'élévation desdits fragments (2) dudit matériau végétal et dudit matériau polymère à une température supérieure ou égale à une température de fusion dudit matériau polymère et inférieure ou égale à une température de carbonisation dudit matériau végétal.

13. Procédé de production selon l'une quelconque des revendications 8 à 12, comprenant
- avant ledit refroidissement dudit mélange, l'extrusion dudit mélange pour obtenir une bande continue (4) de mélange, dans lequel ledit refroidissement dudit mélange comprend le refroidissement de ladite bande continue (4) de mélange à température ambiante ;
- avant le broyage dudit mélange refroidi, l'obtention de granulés (5) de mélange par granulation de ladite bande continue (4),
dans lequel ledit broyage dudit mélange refroidi comprend le broyage desdits granulés (5) de mélange et le tamisage desdits granulés (5) de mélange broyé pour obtenir lesdites particules (201).

14. Surface de gazon synthétique (400) comprenant un tapis de gazon synthétique (100) et une couche d'un matériau de remplissage (200) selon l'une quelconque des revendications 1 à 7 ou produite selon l'une quelconque des revendications 8 à 13, ladite couche étant disposée au-dessus dudit tapis de gazon synthétique (100), dans lequel ladite couche de matériau de remplissage (200) présente une masse par unité de surface supérieure ou égale à 2 kg/m² et inférieure ou égale à 15 kg/m² et une densité apparente inférieure ou égale à 0,8 g/cm³.

15. Surface de gazon synthétique (400) selon la revendication 14, dans laquelle une couche de matériau de stabilisation, constituée de sable ou de gravier fin, est disposée sous la couche de matériau de remplissage (200).
